# EUROPEAN PATENT APPLICATION

(11) **EP 4 628 457 A1**
(43) Date of publication of application: **08.10.2025**
(21) Application number: 24223392.2
(22) Date of filing: 27.12.2024
(51) Int. Cl.: C03B 9/16, C03B 9/193, F16P 1/00, C03B 9/00

(54) **I.S. MACHINE FOR FORMING HOLLOW GLASS ARTICLES**

(30) Priority: 05.04.2024 IT 202400007573
(71) Applicant: Bottero S.p.A., 12100 Cuneo (IT)
(72) Inventor: DI PRIMA, Elisa, 12100 CUNEO (IT); PATANÈ, Alessandro, 12100 CUNEO (IT); OSTORERO, Marcello, 12100 CUNEO (IT); BAROLO, Maurizio, 12100 CUNEO (IT)
(74) Representative: Studio Torta S.p.A.

(57) **Abstract**

An individual section machine (1) for forming hollow glassware has a plurality of forming sections (10) arranged in positions that are aligned to each other along a longitudinal axis (4), and a base (2), in common with all the forming sections; each forming section (10) has a blank mould (13), a finishing mould (14), and a plurality of operating units (15) configured to form at least one hollow glass product in the moulds from a corresponding glass gob; the forming sections (10) have respective support bodies (12), with a parallelepipedal shape, fixed to the base (2) and supporting the moulds and operating units (15); each support body (12) is spaced from the support bodies (12) of the adjacent forming sections (10) so as to define respective intermediate gaps (21), with a barrier structure (35) arranged above each of these gaps (21), to physically separate the forming sections (10) from each other.

## Description

### Cross-reference to related patent applications

This patent application claims priority from Italian patent application no. 102024000007573 filed on April 5, 2024, the entire disclosure of which is incorporated herein by reference.

### Technical field

The present invention relates to an individual section machine, usually referred to as an IS machine, for forming hollow glassware.

### Background

As is well known, machines for forming hollow glassware, commonly known as IS machines, comprise a plurality of forming sections, each operating independently of the other sections to form a respective set of glassware from glass gobs fed from a distributor.

Each forming section includes a blank mould and a finishing mould, which are configured to form a given number of glass products, between one and four, are driven by respective mould opening/closing devices, and are associated with respective cooling systems. Each forming section also includes a grip and inversion unit to pick up the semi-finished glass items (also known as "parisons") formed in the blank mould and transfer them to the finishing mould, and a grip and transfer unit to pick up the glass items formed in the finishing mould and deposit them on a support plane, from which the same items are then pushed onto an outlet conveyor, parallel to the row of forming sections.

Each forming section then has a plurality of mechanisms associated with the moulds, including: a funnel mechanism and a buffer mechanism, associated with the blank mould, to guide the entry of the glass gobs and close the blank mould at the top; a punch mechanism, to create a cavity within the glass mass contained in the blank mould; and a pneumatic blow head mechanism associated with the finishing mould to force the glass against the walls of that mould and to cool those walls.

In known solutions, for each forming section, the various components are supported, directly or indirectly, by a respective parallelepipedal body, usually referred to as a box. The boxes of the various forming sections are defined by separate bodies, usually manufactured in a modular manner, with standard dimensions, and supported by a common base. At the same time, the boxes are arranged on the base in positions that are in contact with each other to form a continuous row.

This arrangement of the boxes is universally used for several reasons, in particular to limit the overall dimensions of the machine as much as possible within the production plant and to simplify the management of the feeding of the glass gobs from the distributor to the blank moulds (in order to limit as much as possible the differences in the paths of the glass gobs between the different forming sections).

In addition, the arrangement of the boxes described above ensures a high degree of structural rigidity, which is necessary to avoid undesirable bending of the base during the movements that are usually carried out to install the machine in the plant. In particular, this rigidity allows the machine to be lifted by means of eyebolts, which are fixed at opposite ends of the base, and then moved while it is lifted, without inducing undesirable deformations that could change the position of the components as designed. In practice, during lifting, the boxes define an abutment or lateral support with respect to each other, and this abutment counteracts any bending of the base underneath, which could be caused by the weight of the machine.

Known solutions of the type just described, although universally used, are not, however, without their critical issues.

In particular, in the most common solutions, the buffer mechanism and the funnel mechanism of each blank assembly encroach on the space of the adjacent forming sections, when they are arranged in their rest positions. Due to this overlap, maintenance and mould change operations, which are carried out manually by the workers, are complicated and, therefore, can be difficult to implement.

More generally, in the case of maintenance and/or mould changes, access to and manual intervention on the components provided above the box are not at all easy, due to the number of components. Therefore, there is a need to improve the ergonomics of workers operating in these situations.

In other words, in the area of access to the forming sections, there is a need for continuous improvement in terms of worker ergonomics.

To protect against accidental contact, it is common practice to stop the forming sections adjacent to the maintenance section, thus reducing the risk of contact with moving parts; however, additional preventive measures are recommended.

To this end, it was thought to use vertical protection grids to physically separate the spaces above the boxes at the boundary between adjacent forming sections. However, in the known solutions described above, these grids are not always applicable. In fact, they are relatively difficult to install due to lack of space and/or attachment points, and are incompatible with some known solutions of the buffer mechanisms and funnel mechanisms. In this regard, in order to avoid interference of these mechanisms with any grids, it would be necessary to adopt special mechanical transmissions (e.g. a pantograph linkage) to reduce the overall dimensions in the rest positions.

Therefore, there is a need to refine known solutions in order to improve ergonomics and ease of use, without compromising or complicating the operation of the existing components.

More generally, there is a need to increase flexibility, i.e. reduce machine design constraints, in order to have more freedom to study and apply improvements to the known machines.

CN216191878U shows, in Figure 2, a solution that corresponds to the preamble of claim 1, and where the forming section boxes are arranged in spaced-apart positions. WO2023081385A1 shows a solution in which the boxes on the parison side can be moved in relation to each other. US2016170399A1 shows a single forming section where two support uprights are arranged on opposite sides of the box.

The purpose of the present invention is to provide an individual section machine for forming hollow glassware that can fulfil the above requirements, preferably in a simple and economical manner.

### Summary of the invention

According to the present invention, an individual section machine for forming hollow glassware, as defined in the appended claim 1, is provided.

The dependent claims define preferred embodiments of the present invention.

### Brief description of the drawings

In order to better understand the invention, a preferred, non-limiting embodiment thereof will now be described by way of example with reference to the accompanying drawings, in which:
- Figure 1 is a front perspective view showing, in a simplified manner, a preferred embodiment of the individual section machine for forming hollow glassware according to the present invention;
- Figure 2 is a simplified perspective view from above of the machine in Figure 1;
- Figure 3 is a different perspective view, showing the machine in Figures 1 and 2 with parts removed for clarity;
- Figure 4 is similar to Figure 3 and shows some parts that were removed from Figure 3;
- Figure 5 is a perspective view showing a detail in Figure 1 on an enlarged scale, in a simplified manner and with parts removed for clarity;
- Figure 6A shows some parts in Figure 5, in cutaway view according to a vertical cross-section plane;
- Figure 6B is an enlarged view of a detail in Figure 6A; and
- Figure 7 is a plan view, showing two individual sections of the machine from the previous figures in a schematic and simplified manner.

### Description of preferred embodiments

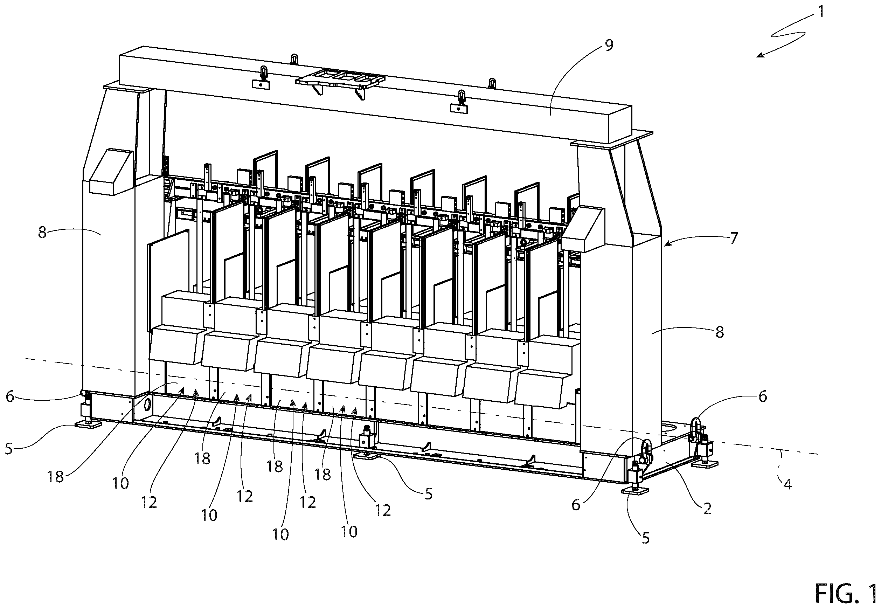

In Figure 1, reference number 1 indicates, as a whole, an individual section machine, commonly referred to as an IS machine (illustrated in a partial and simplified manner), for forming hollow glassware.

The machine 1 comprises a base 2 that is substantially parallelepipedal in shape, flat in the vertical direction, extends along a horizontal axis 4, rests on the floor by means of a plurality of feet 5 and can be raised by means of a plurality of eyebolts 6 attached to opposite axial ends of the base 2.

The machine 1 also includes a gantry structure 7 supported by the base 2. The structure 7 consists of two uprights 8, fixed to the opposite axial ends of the base 2, and a crossbeam 9, which extends parallel to the axis 4 and is fixed to the upper ends of the uprights 8.

The machine 1 comprises a plurality of forming sections 10, which are arranged on the base 2, below the crossbeam 9, and in positions aligned with each other along the axis 4 between the two uprights 8, and are configured to form respective hollow glass products, which are then transferred, at the outlet, to a conveyor, not illustrated, parallel to the axis 4.

The forming sections 10 are modular, so the following description refers to only one of them.

The forming section 10 comprises a support body, externally parallelepiped-shaped, internally hollow, arranged on an upper face of the base 2, usually referred to as a box and indicated by reference number 12 in the attached figures. The box 12 can be monolithic or consist of walls fixed together.

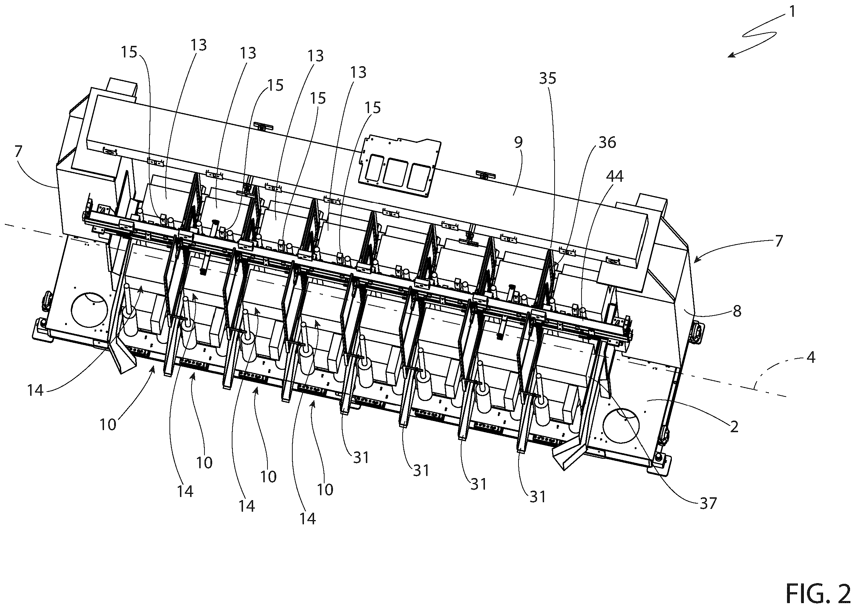

With reference to Figure 2, the forming section 10 has a parison side 13 and a finishing side 14, which are diametrically opposite each other with respect to the axis 4 and house a blank mould and a finishing mould, respectively, having a certain number of forming cavities, between one and four, for forming glassware from respective glass gobs, which are fed to the blank mould by a distribution and delivery system, which is not illustrated. The blank and finishing moulds consist of corresponding half-moulds, which are movable under the thrust of respective opening/closing units, known and not described in detail.

In addition, the forming section 10 comprises a plurality of operating units, which are known and not illustrated in detail, collectively indicated by reference number 15 and supported by the box 12. In particular, the operating units 15 include: a funnel mechanism, arranged above the box 12, to guide the glass gobs into the forming cavities of the blank mould; a buffer mechanism, arranged above the box 12, to close the upper openings of these forming cavities; a punch unit, arranged on the parison side 13 within the box 12, to deform the glass gobs dropped into the blank mould, and to form respective semi-finished glass products (usually referred to as "parisons"); an inversion unit, arranged above the box 12 at the boundary between the parison side 13 and the finishing side 14, to grasp the semi-finished products formed in the blank mould and transfer them into the finishing mould; a blow head, arranged above the box 12 on the finishing side 14, to exert pneumatic pressure in the finishing mould; an extraction unit arranged at the finishing side, to grasp the glass products that have been formed in the finishing mould, and transfer them to a support plane, from which the same glass products will then be pushed onto the outlet conveyor, mentioned above. In addition to these operating units, the forming section 10 can be equipped with auxiliary operating units (e.g. for cleaning, swabbing, cooling, etc....).

The boxes 12 of the forming sections 10 are preferably made with standard external dimensions, i.e. with identical external dimensions to those found in known solutions. For example, the size of each box 12 along the axis 4 is about 21 inches, i.e. about 53 centimetres.

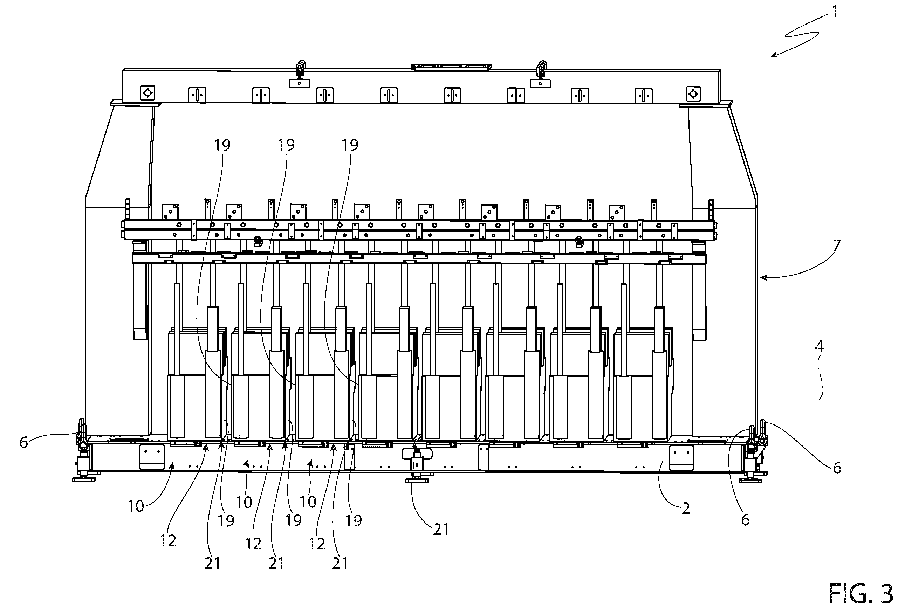

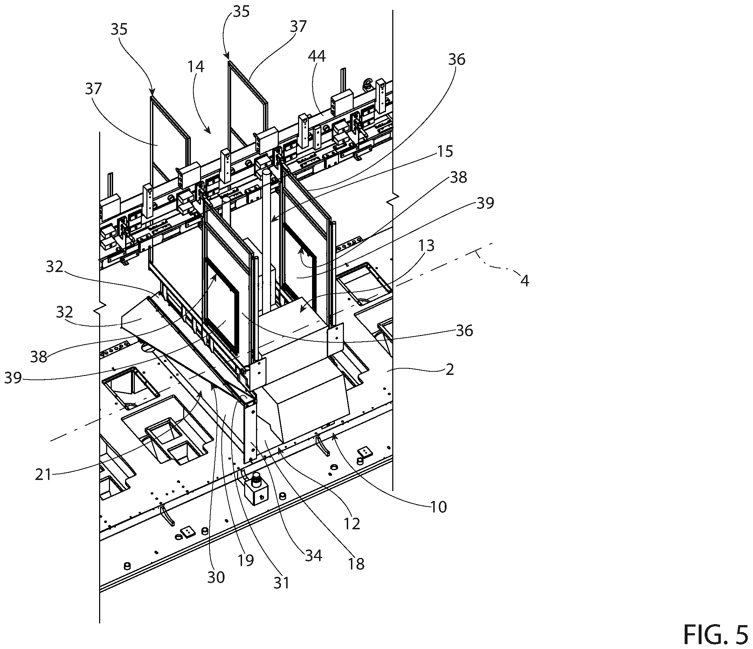

The boxes 12 project from the upper face of the base 2, as mentioned above, and are fixed directly to the latter (e.g. by bolts) . The boxes 12 comprise respective front walls 18 (Figures 1 and 5), arranged vertically and in positions aligned with each other along the parison side 13, and a respective pair of side walls 19 (Figures 3 and 5), which are vertical and parallel to each other and face the adjacent boxes 12.

According to this invention, as shown in Figure 3, the side walls 19 are spaced apart along the axis 4, so that the boxes 12 are separated from each other by a corresponding vertical slot 21. Consequently, the boxes 12 are not attached directly to each other, but only indirectly, as will be described below in detail.

By spacing out the boxes 12, it is possible to support a lower number of forming sections than if the side walls 19 were directly resting against each other, as in known solutions. For example, the base 2 can include ten forming sections (instead of twelve, in the case just indicated in the prior art). Despite having this drawback, the proposed solution has important technical advantages, in particular the fact that it provides better ergonomics when it is necessary to access the forming sections 10 to perform maintenance and/or mould change operations, as will be explained in more detail below.

The width of the slots 21 along the axis 4, i.e. the distance between the side walls 19 of the boxes 12, is preferably defined by a constant pitch, which is the same for the entire machine 1. More preferably, this width or distance is at least 1 inch and, in particular, less than or equal to 10 inches, in order to ensure optimal ergonomics. In this specific example, this width or distance is approximately 4 inches, i.e. about 10 centimetres.

The boxes 12 are preferably manufactured in such a way that they are self-supporting, i.e., in such a way that they are stiff enough to support the moulds and the various operating units 15 in their respective positions that have been designed, without the need for additional supports in addition to the base 2 and the gantry structure 7 (i.e. without the need for additional stiff supports in the slots 21). This self-supporting nature of the boxes 12 can be achieved by means of structures and/or materials and/or internal configurations that are easily obtained by an experienced designer in this field, and are therefore not described in detail here.

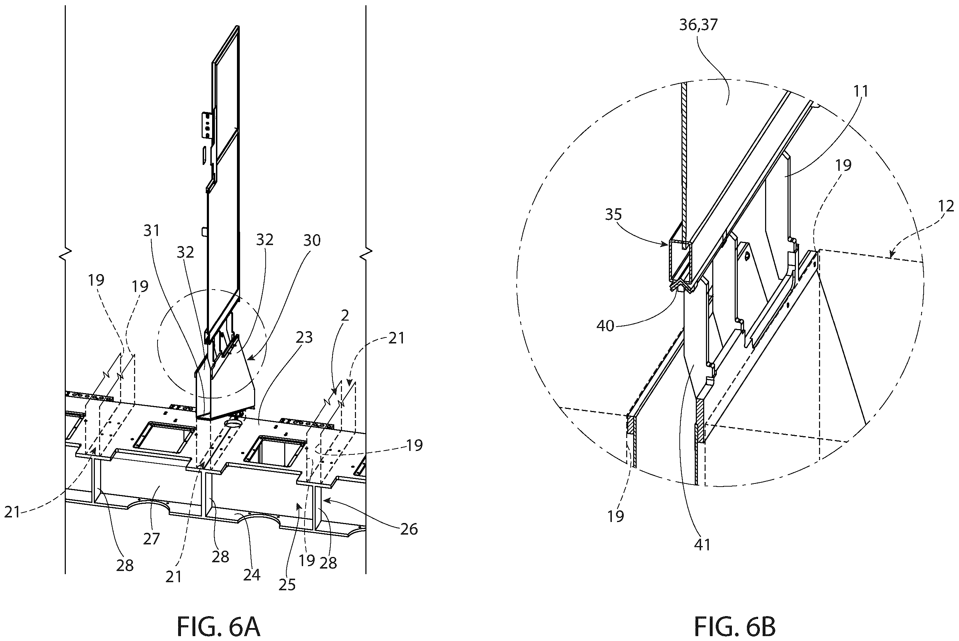

At the same time, the base 2 is designed and constructed in such a way as to have a bending stiffness that enables it to support the weight of the machine 1, without being subject to permanent deformations, particularly when it is lifted by means of the eyebolts 6. At the same time, the base 2 is designed and constructed to be relatively light. For this purpose, the base 2 is preferably made of steel and, as shown in the cross-section in Figure 6A, has a sandwich structure, in that it comprises an upper horizontal plate 23, a lower horizontal plate 24, spaced vertically from the plate 23 so as to form an interspace 25, and a network of ribs 26, arranged in the interspace 25 and consisting of vertical ribs attached to the plates 23 and 24, e.g. by welding. In particular, the network of ribs 26 comprises at least one longitudinal rib 27 extending parallel to the axis 4, in an intermediate zone of the base 2, from one end to the other; in addition, the network of ribs 26 comprises a plurality of transverse ribs 28, which extend orthogonally to the rib 27, at least at the parison side 13, and are each arranged below a respective slot 21.

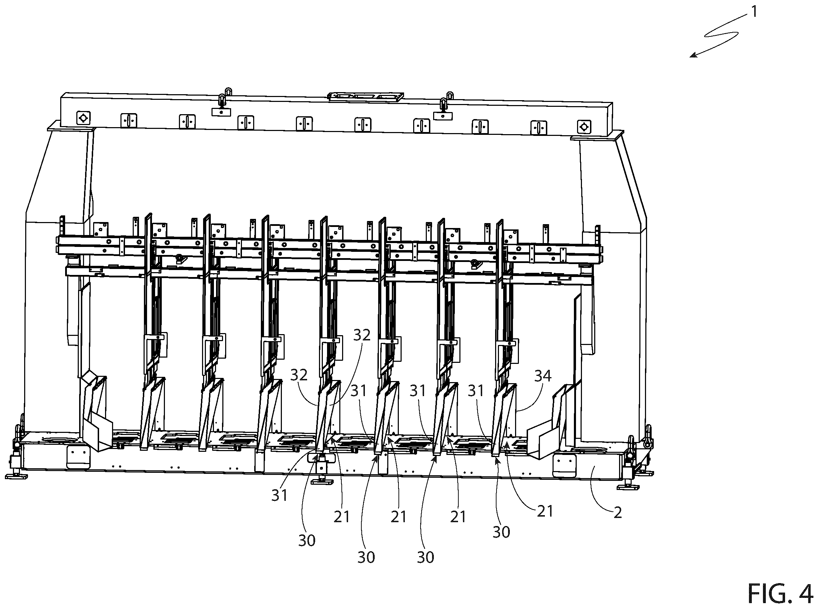

With reference to Figures 4 and 6A, according to a preferred aspect of this invention, the slots 21 are engaged by respective gutter structures 30, coupled to the side walls 19 of the boxes 12 and/or the base 2, and having respective chutes 31, which slope downwards from the parison side 13 towards the finishing side 14 and, preferably, end at the outside of the base 2 perimeter. In particular, each gutter structure 30 comprises a pair of side walls 32 that extend upwards from the chute 31, are vertical and face corresponding side walls 19, and are fixed to the latter. For example, the gutter structures 30 are fixed, directly or indirectly, to an upper horizontal edge of the side walls 19.

In particular, as also shown in Figure 5, a vertical covering wall 34 is arranged to close each slot 21 at the parison side 13, e.g. in a position aligned with the front walls 18.

Therefore, the side walls 19 of the boxes 12 are connected to each other via the gutter structures 30, but the latter have negligible stiffness, so they do not contribute to supporting the forming sections 10.

During maintenance operations, the gutter structures 30 are used by the maintenance workers as a discharge channel at the side of the boxes 12, in particular to dump any glass scrap present in the forming sections 10, so that such scrap is then collected at the lower end of the chutes 31, i.e. downstream of the finishing side 14. In general, however, it is possible that the space available in the slots 21 can be used in a different way from that just mentioned.

Again with reference to Figure 5, according to this invention, the space available above each slot 21 is engaged by a barrier structure 35, which physically separates the forming sections 10 from each other and, preferably, is attached to one of the two boxes 12 that define this slot 21. In particular, the barrier structures 35 are fixed to the side walls 19, e.g. at their upper horizontal edge, and do not have attachment points on the upper surface of the boxes 12 (so as not to obstruct the operating units 15).

Each barrier structure 35 preferably comprises two vertical barriers 36 and 37, defined by separate bodies, extending orthogonally to the axis 4 at the parison side 13 and finishing side 14, respectively. The barriers 36 and 37 preferably include respective grids.

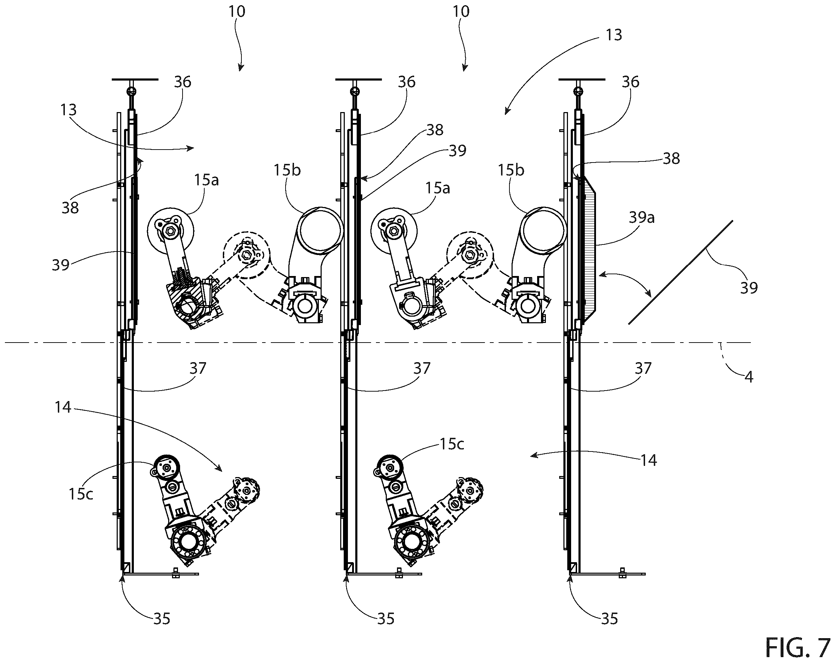

In particular, the barriers 36 and 37 of each barrier structure 35 are not aligned with each other, i.e. they are in staggered positions along the axis 4, to limit risks of interference with the buffer mechanisms, the funnel mechanisms, and the blow heads, indicated, respectively, by reference numbers 15a, 15b, and 15c in the plan view in Figure 7. The latter shows the operative position (in dashed lines) and the rest position (in solid lines) of these operating units, equipped with standard components, if the finishing and blank moulds have just one forming cavity. In the rest positions, one can visually note the absence of interference with the barrier structures 35, and the absence of overlapping on the forming sections 10 that are adjacent. In addition, the distances from the barrier structures 35 are great, so there is freedom to possibly adopt special components (in shape, size, or structure), and non-standard ones, for these operating units.

On the parison side 13, the barrier structure 35 preferably has a window 38 engaged by a barrier portion 39 that is flat, but can be replaced with a different barrier portion 39a, having the same outer perimeter, but with a concave shape, so as to leave more space for the funnel mechanism 15b if the latter has larger dimensions (for example when there is more than one forming cavity for each mould), in order to avoid interference with the barrier 36.

To summarise, when the buffer mechanism 15b tends to overlap on the adjacent forming section, this overlap is relatively limited, thanks to the spacing between the forming sections 10, defined by the slots 21, and what is more, the barrier structure 35 can be easily modified to fit the dimensions, thanks to the possibility of choosing between the barrier 39, 39a portions.

With reference to Figure 6B, preferably each barrier structure 35 comprises a horizontal rail 40, which extends orthogonally to the axis 4 along the lower edge of the barriers 36 and 37 and is fixed to the corresponding box 12 by a plurality of legs 41, which protrude downwards from the same rail 40. The lower ends of the legs 41 are then fixed to the side wall 19 of the corresponding box 12, as mentioned above. The lower edge of the barriers 36 and 37 and the rail 40 are coupled in support of each other and, advantageously, have V-shaped, or inverted V-shaped, cross-sections that are complementary to each other, so as to define a guide that allows the barriers 36, 37 to slide along the rail 40 during assembly (prior to their attachment to the rail 40). In addition, with reference to Figure 5, at their upper ends, the barriers 36, 37 are fixed to a fixed crossbeam 44, which is parallel to the crossbeam 9 and is supported by the uprights 8. The fixed crossbeam 44, in particular, is defined by a tubular structure used as a duct for the passage of air.

As mentioned above, the barrier structures 35 have the function and advantage of physically isolating each forming section 10, on opposite sides, to form a sort of cell, and prevent workers from bumping into components of adjacent forming sections, which may be hot and/or moving, during maintenance and/or mould change operations, in order to improve ease of use and ergonomics.

More specifically, thanks to the spacing between the boxes 12, each forming section 10 can be accessed relatively easily, and one can operate with more space available, compared to the prior art where the forming sections are placed next to each other. Obviously, improved access and working conditions in the forming sections 10 result in a reduction in the time required for maintenance and mould changes, with a consequent improvement in machine downtime and costs.

On the other hand, due to the same spacing, it becomes easy to provide appropriate separators in the intermediate gaps between the forming sections 10. In detail, a solution is adopted with the barrier structures 35 described above. Specifically, thanks to their specific characteristics, the barrier structures 35 can be mounted easily, without the need to change the type and/or operation of the operating units 15 already provided in the known solutions, and without interfering with their movements.

Thanks to the windows 38 with interchangeable barrier portions (39, 39a), the proposed solution is relatively flexible, as it can be adapted to different operating unit 15 sizes.

At the same time, as described above, it is possible to design the boxes 12 and base 2 in such a way that they maintain their stability and the planned positions for the various components (in particular, during lifting and overhead transport, which is necessary for the installation of machine 1), without the need for additional support structures.

In addition, spacing the forming sections 10 (without changing the standard external dimensions of the boxes 12) makes the design and construction of the various components of the entire machine 1 more flexible. The machine can therefore be improved more easily, having fewer constraints on the overall dimensions. For example, the additional space generated by the spacing between the boxes 12 can be exploited advantageously by introducing chutes 31, to manually evacuate excess material from the forming sections 10 during maintenance, in a relatively simple and effective manner.

Lastly, it is clear that modifications and variations may be made to the machine 1 described and illustrated herein without departing from the scope of the present invention, as set forth in the appended claims.

In particular, the barrier structures 35 could be replaced by a photocell system defining an intangible or virtual barrier; or the barriers 36 and 37 could form parts of a single barrier, and/or could have a different configuration from the grid structure mentioned as an example (but the use of grids is optimal for the circulation of ambient air and, therefore, for keeping the temperature in the forming sections 10 under control).

## Claims

1. An individual section machine (1) for forming hollow glassware, the machine comprising:
- a plurality of forming sections (10) arranged in positions that are aligned to each other along a longitudinal axis (4) ;
- a base (2), in common with all said forming sections; each said forming section (10) having a parison side (13) and a finishing side (14) and comprising a blank mould in said parison side (13), a finishing mould in said finishing side (14), and a plurality of operating units (15) configured to form at least one hollow glass product in said moulds from a corresponding glass gob; said forming sections (10) further comprising respective support bodies (12), having a parallelepipedal shape, fixed to said base (2) and supporting said moulds and said operating units (15);
wherein, along said longitudinal axis (4), each said support body (12) is spaced from the support bodies (12) of the adjacent forming sections (10) so as to define respective intermediate gaps (21);
**characterised in that** a photocell system or a respective barrier structure (35) is arranged above each said intermediate gap (21) to virtually or, respectively, physically separate the forming sections (10) from each other.

2. The machine according to claim 1, wherein the distance between said support bodies (12) along said longitudinal axis (4) is constant throughout the machine (1).

3. The machine according to claim 1 or 2, wherein the distance between said support bodies (12) is approximately four inches.

4. The machine according to any one of the preceding claims, wherein said intermediate gaps (21) are engaged by respective chutes (31), which are downhill from said parison side (13) towards said finishing side (14).

5. The machine according to any one of the preceding claims wherein said base (2) comprises:
- an upper horizontal plate (23),
- a lower horizontal plate (24), vertically spaced from the upper horizontal plate (23) so as to form an interspace (25), and
- a network of ribs (26), arranged in said interspace (25) and consisting of vertical ribs fixed to said plates (23, 24) .

6. The machine according to claim 5, wherein said network of ribs (26) comprises:
- at least one longitudinal rib (27) extending parallel to said longitudinal axis (4), at an intermediate area of the base (2); and
- a plurality of transverse ribs (28), extending orthogonally to said longitudinal rib (27), at least at the parison side (13), and respectively below said intermediate gaps (21).

7. The machine according to any of the previous claims, wherein said support bodies (12) comprise respective side walls (19), which are vertical and facing the side walls (19) of the adjacent support bodies (12), along said longitudinal axis (4), and wherein said barrier structures (35) are fixed at the bottom to said side walls (19).

8. The machine according to any of the previous claims, wherein each said barrier structure (35) comprises two barriers (36, 37) arranged at the parison sides (13) and finishing sides (14), respectively, and defined by separate bodies.

9. The machine according to claim 8, wherein the two barriers (36, 37) of each said barrier structure (35) are arranged in staggered positions along said longitudinal axis (4) .

10. The machine according to claim 8 or 9, wherein said barrier structures (35) comprise respective rails (40) supporting the corresponding barriers (36, 37); said barriers (36, 37) and said horizontal rail (40) being shaped so as to define a sliding guide in a horizontal direction, orthogonal to said longitudinal axis (4).

11. The machine according to any of the previous claims, wherein said barrier structures (35) are fixed, at the bottom, to the respective said support bodies (12) and, at the top, to a fixed longitudinal crossbeam (44), which is in common with all the forming sections (10).

12. The machine according to any of the previous claims, wherein said barrier structures (35) have respective windows (38) engaged by respective barrier portions (39), which are replaceable with other barrier portions (39a) having the same outer perimeter and, internally, a different concavity/convexity.

13. The machine according to any of the previous claims, wherein said barrier structures (35) comprise respective grids for physically separating the forming sections (10) from one other.
